**Europäisches Patentamt**

**European Patent Office**

**Office européen des brevets**

(19)

(11) Publication number : **0 402 918 B1**

## (12) EUROPEAN PATENT SPECIFICATION

(45) Date of publication of patent specification :
**27.12.95 Bulletin 95/52**

(51) Int. Cl.⁶ : **H04N 7/14, H04N 7/12, H04L 27/38**

(21) Application number : **90111239.1**

(22) Date of filing : **13.06.90**

(54) Static image video telephone transmission and reception system

(30) Priority : **15.06.89 JP 152908/89**

(43) Date of publication of application :
**19.12.90 Bulletin 90/51**

(45) Publication of the grant of the patent :
**27.12.95 Bulletin 95/52**

(84) Designated Contracting States :
**DE FR GB**

(56) References cited :
**EP-A- 0 134 860**
**EP-A- 0 206 572**
**EP-A- 0 314 122**

(73) Proprietor : **MITSUBISHI DENKI KABUSHIKI KAISHA**
**2-2-3, Marunouchi**
**Chiyoda-ku Tokyo (JP)**
Proprietor : **MITSUBISHI ELECTRONICS AMERICA, INC.**
**5757 Plaza Drive**
**Cypress, CA 90630-0007 (US)**

(72) Inventor : **Yokodate, Shinya, c/o MITSUBISHI DENKI K. K.**
**Seikatsu System Kenkyusho,**
**2-14-40, Ofuna**
**Kamakura-shi, Kanagawa-ken (JP)**
Inventor : **Kaneko, Koji, c/o MITSUBISHI DENKI K. K.**
**Seikatsu System Kenkyusho,**
**2-14-40, Ofuna**
**Kamakura-shi, Kanagawa-ken (JP)**
Inventor : **Saigusa, Kazuyuki, c/o MITSUBISHI DENKI K. K.**
**Seikatsu System Kenkyusho,**
**2-14-40, Ofuna**
**Kamakura-shi, Kanagawa-ken (JP)**
Inventor : **Mizushima, Tatsuhiko, c/o MITSUBISHI DENKI K. K.**
**Seikatsu System Kenkyusho,**
**2-14-40, Ofuna**
**Kamakura-shi, Kanagawa-ken (JP)**
Inventor : **Lewis, Scott A.**
**811, Arthur Street,**
**Davis, California, 95616 (US)**
Inventor : **Fletcher, Gary S.**
**3522 Willard Rocklin**
**California, 95677 (US)**

(74) Representative : **Pellmann, Hans-Bernd, Dipl.-Ing. et al**
**Patentanwaltsbüro**
**Tiedtke-Bühling-Kinne & Partner**
**Bavariaring 4**
**D-80336 München (DE)**

EP 0 402 918 B1

## Description

### BACKGROUND OF THE INVENTION

#### Field of the Invention

The present invention relates to a static image video telephone transmission and reception system, and in particular, to a static video telephone transmission and reception system in which a static image signal obtained from a television camera is modulated to an audio signal, the modulated signal is sent to a telephone line while talking to transmit the static image signal, and on the other hand, the static image signal supplied over the telephone line is demodulated and visualized on a display unit.

#### Description of the Prior Art

In recent years there has been a demand for a video telephone that allows to transmit voice and image over a telephone line simultaneously. However, it is difficult to continuously transmit and receive a moving image which requires an enormous amount of data over the existing telephone line. Accordingly, a static image video telephone which transmits a static image to the other party during conversation is practically used.

This static image video telephone can transmit any desired static image, for example, a face of a talking person, a photographic picture or drawing matching to the contents of the talking by temporarily interrupting the conversation during the usual talking with voice.

According to such a static image video telephone, it is therefore possible to transmit and receive an image over a telephone line which has been impossible heretofore. Furthermore, since only one sheet of static image is transmitted at a time and the amount of data processing is also limited, the realization of the practical video telephone can be facilitated.

A static image video telephone apparatus capable of transmitting the static image is disclosed, for example, in the article on pages 19-27 of the magazine "Television Technics & Electronics", ISSN 0497-2791, Vol.36, No. 9, September 1, 1988 by Akira Teshima.

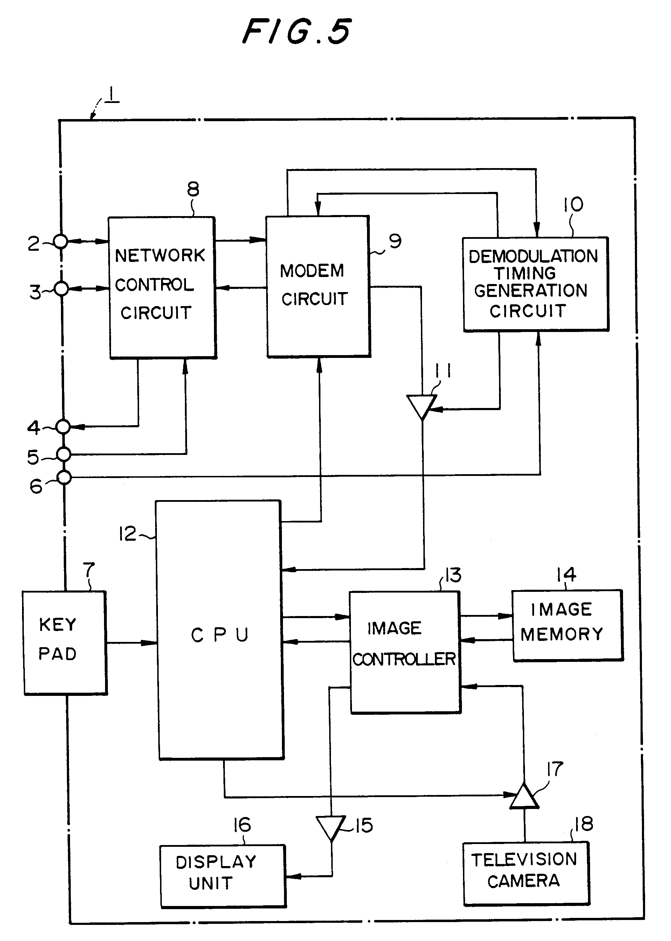

Fig. 5 is a block diagram of the prior art static image video telephone apparatus used for the static image video telephone transmission.

With reference to Fig. 5, the static image video telephone apparatus 1 is provided with an external telephone set terminal 2 for connecting to a telephone set not shown, a telephone line connecting terminal 3, a picture recording terminal 4 for connecting to a tape recorder, a reproducing terminal 5, a telephone/reproduction change-over switch 6, and a key pad 7, thereby to achieve connection between the apparatus 1 and other external equipments.

Furthermore, the static image video telephone apparatus 1 is provided with a network control circuit 8, a modem 9, a demodulation timing generation circuit 10, an analog/digital converter 11, a central processing unit (hereinafter, referred to as a CPU) 12, an image controller 13, an image memory 14, a digital/analog converter 15, a display unit 16, an analog/digital converter 17, and a television camera 18.

The operation of the prior art static image video telephone apparatus will now be described. Voice conversation is transmitted from the telephone set externally provided to the telephone line terminal 3 through the external telephone terminal 2 and the network control circuit 8. On the other hand, a voice signal from the other party is transmitted to the external telephone set via a reverse route of the above-mentioned signal route, that is, through the telephone line terminal 3, the network control circuit 8, and the external telephone set terminal 2.

In the case of image signal transmission, the CPU 12 detects transmission of the image commanded by the operation of the key pad 7. The CPU 12 transmits an image data stored in the image memory 14 in accordance with a program stored therein by adding control information thereto towards the telephone line terminal 3 through the modem circuit 9 and the network control circuit 8.

In the case of image signal receiving, the image signal transmitted over the telephone line is supplied to the modem 9 through a reverse route of the above-mentioned signal route. The image data from the other party is demodulated in the modem circuit 9 by a demodulation timing signal generated in the demodulation timing generation circuit 10, and the demodulated signal is stored in the image memory 14 through the analog/digital converter 11, CPU 12, and image controller 13, and then displayed on the display unit 16.

When the transmission and receiving of the image is completed, the network control circuit 8 resumes the voice conversation. The image shot by the television camera 18 during conversation is quantized by the analog/digital converter 17, stored in the image memory 14 through the image controller 13, and sequentially read onto the display unit 16.

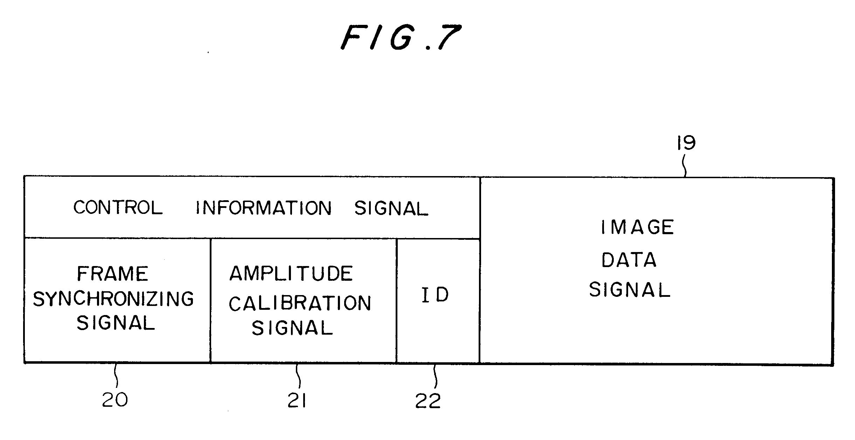

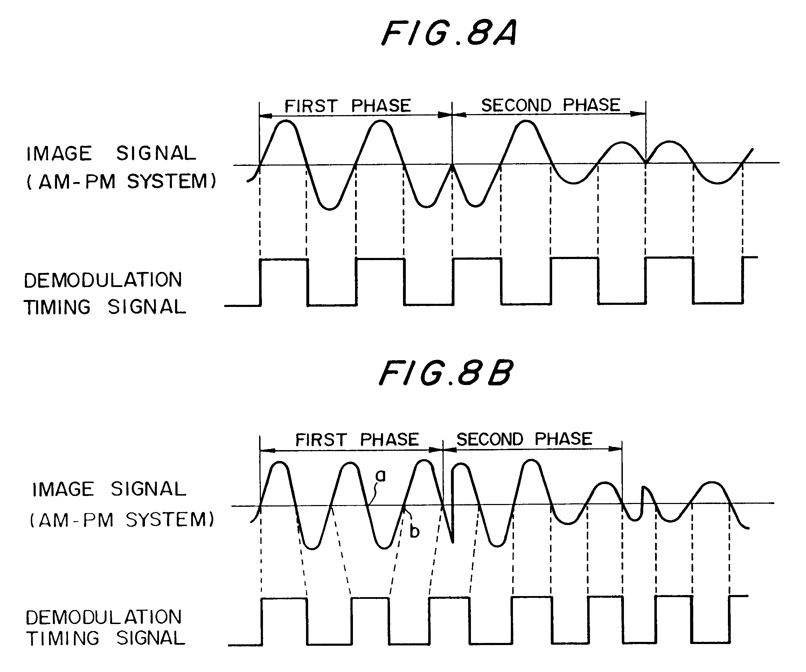

With reference to Figs. 7 and 8, a frame format for image transmission and receiving in the prior art static image video telephone transmission and reception system will be described, as well as the operation for voice and image signal transmission in the prior art static image telephone transmission system.

The frame format used in transmission and receiving of an image is divided into a control information signal and an image data signal as shown in Fig. 7. The control information signal is a signal used to demodulate image data properly, and is composed of a frame synchronizing signal, an amplitude calibration signal, and ID (information data). The frame synchronizing signal is a signal used to generate a demodulation timing signal as shown in Fig. 8A, and also used to switch between voice and image modes. The amplitude calibration signal is a signal used to set an AGC (automatic gain control) and a tone level of image appropriately. The ID is a data signal representing information of mutual capability identification signal, i.e., a data signal having information on a transmission and receiving of a image signal.

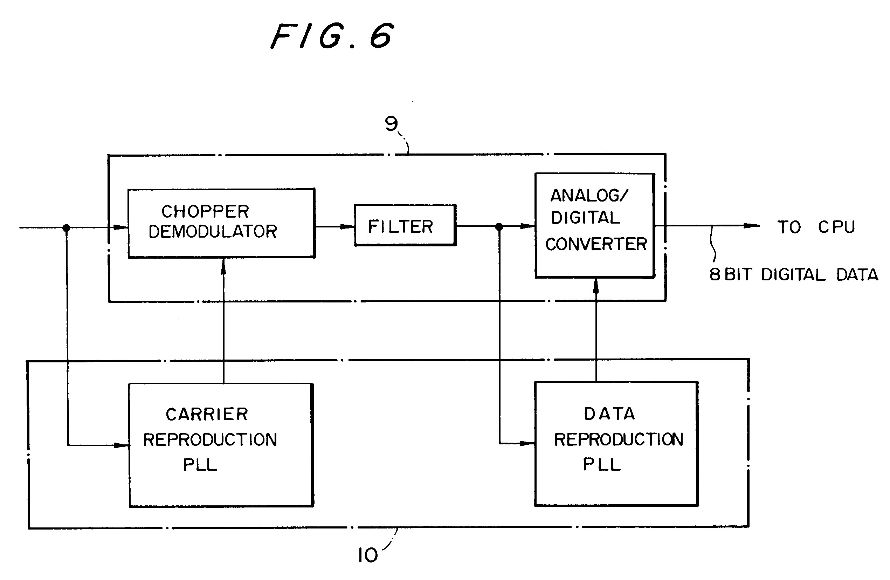

Since the prior art static image video telephone transmission system has an arrangement as described above, when a large frequency shift occurs in a telephone line as shown in Fig. 8B, a phase-locked-loop (hereinbelow referred to as PLL) for reproducing a carrier wave signal and a PLL for reproducing data of the demodulation timing generator as shown in Fig. 6 cannot track the modulated image signal properly, and thus, the demodulation timing signal as shown in Fig. 8B matches to the image signal with a shift of position to the right. With the result that, a received image signal cannot be properly demodulated.

## SUMMARY OF THE INVENTION

The object of the present invention is to solve the above-mentioned problem, and to provide a static image video telephone transmission system capable of demodulating a received static image signal properly even when a large amount of frequency shift occurred in a telephone line by adding a reference frequency signal to the control information signal of the frame format.

This bject is achieved by a static image video telephone transmission and reception method and apparatus as claimed in claims 1 and 7, respectively.

Therefore, according to the present invention, it becomes possible to correct a frequency shift beyond one cycle shift which the PLLs in the conventional system were unable to follow the image signal by adding a reference frequency signal to a control information signal of the static image signal to be transmitted at a predetermined cycle, and by counting the reference signal of the received signal by a given clock and comparing the obtained value to a predetermined count value so that the amount of the frequency shift can be obtained.

The above and other objects, features and advantages of the present invention will become clear from the following description of the preferred embodiments thereof, taken in conjunction with the accompanying drawings.

## BRIEF DESCRIPTION OF THE DRAWINGS

Fig. 1 is a block diagram of a static image video telephone apparatus used in a video telephone transmission and reception system in an embodiment of the present invention;

Fig. 2 is a diagram for explaining a frame format or image transmission and reception in an embodiment of the invention;

Fig. 3 is a block diagram of the demodulation timing generation circuit in Fig. 1;

Figs. 4A and 4B are demodulation timing characteristics diagrams respectively in a normal image signal and in an image signal having frequency shift;

Fig. 5 is a block diagram of a static image video telephone apparatus used in a prior art video telephone transmission and reception system;

Fig. 6 is a block diagram of a demodulation circuit used in a prior art video telephone transmission and reception system;

Fig. 7 is an explanatory diagram of a prior art frame format; and

Figs. 8A and 8B are demodulation timing characteristics diagrams in the prior art static image video telephone transmission and reception system.

## DESCRIPTION OF THE PREFERRED EMBODIMENTS

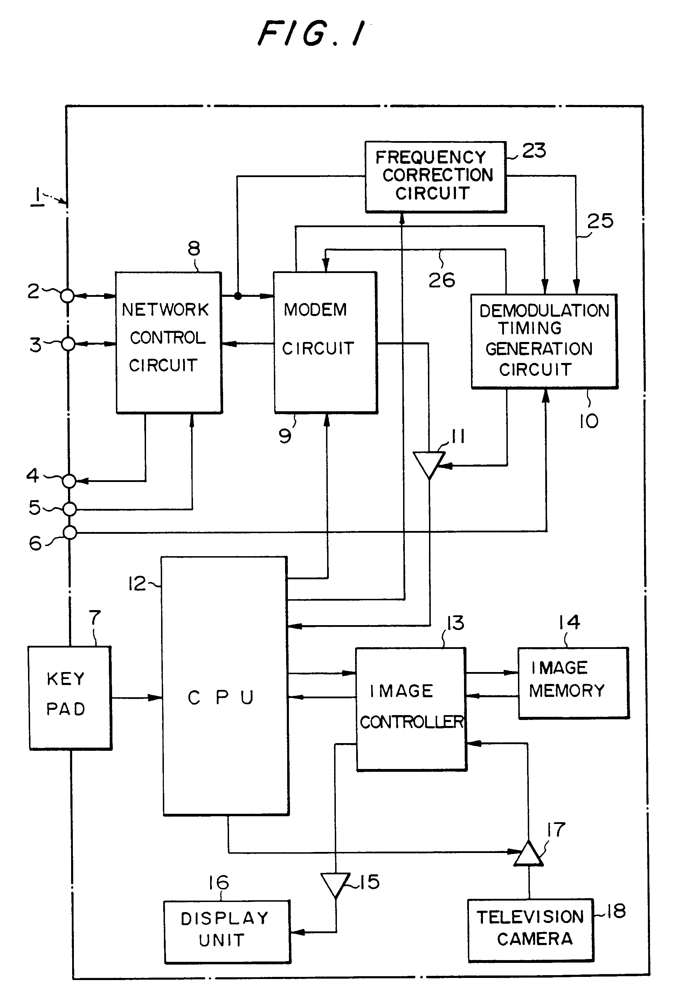

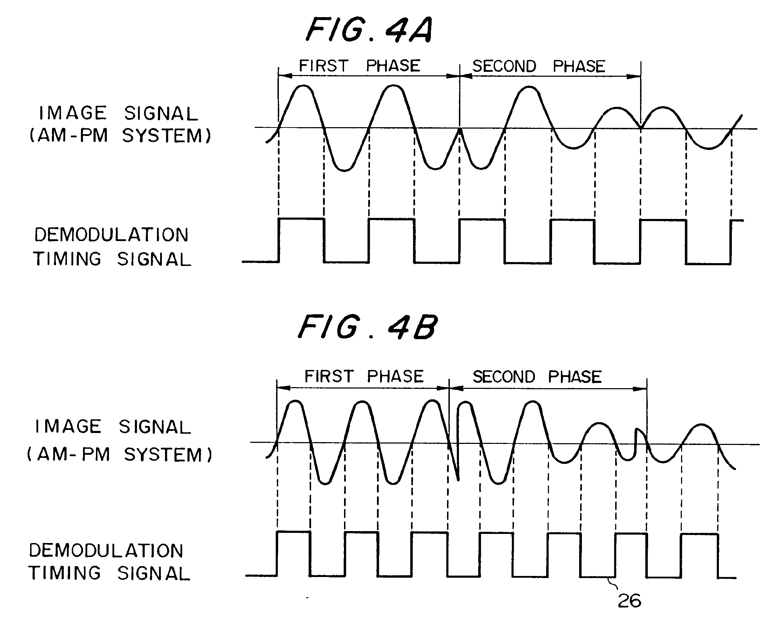

Preferred embodiments of the invention will now be described with reference to Figs. 1 to 4.

With reference to Fig. 1, a static image video telephone apparatus 1 used in a video telephone transmission and reception system in an embodiment of the present invention, similar to the prior art apparatus shown in Fig. 5, includes an analog/digital converter 11, an image controller 13, an image memory 14, a digital/analog converter 15, a display unit 16, and an analog/digital converter 17. On the front portion of the static image video telephone apparatus 1, there are provided with an external telephone set terminal 2, a telephone line connection terminal 3, a picture recording terminal 4, a reproduction terminal 5, a telephone/reproduction change-over switch 6, a key pad 7, etc.

Furthermore, the apparatus 1 comprises a network control circuit 8 connected to a telephone line, a modem circuit 9 for demodulating a static image signal supplied from the network control circuit 8 and for modulating a signal including a static image signal obtained from a television camera 18 and a control information signal added to the static image signal by a CPU 12 thereby to send the modulated static image signal to the network control circuit 8. The apparatus 1 further comprises a demodulation timing generation circuit 10 for providing a demodulation timing signal to the modem circuit 9, and a frequency correction circuit 23 for detecting the amount of frequency shift caused by the telephone line based on the reference frequency signal supplied from the network control circuit 8, and for providing frequency shift correction data 25 to the demodulation timing generation circuit 10.

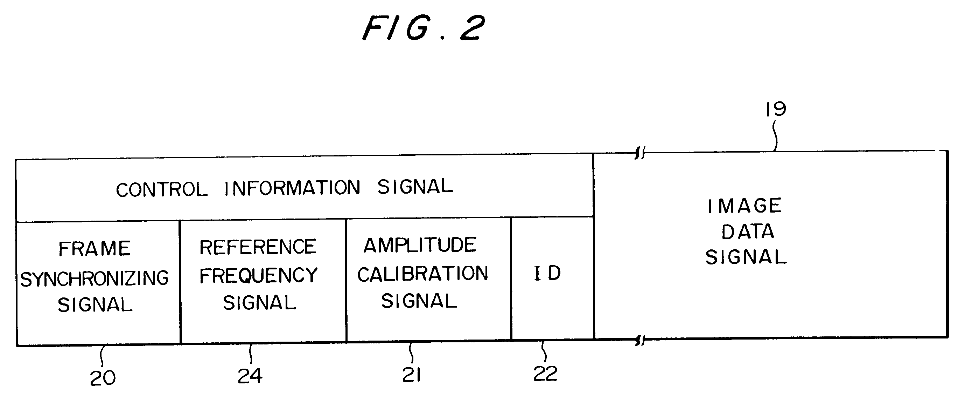

Next, with reference to Figs. 2 to 4, a frame format for transmitting and receiving an image in the present invention, and the transmission and receiving of an image signal using the transmission and reception system of the invention will be described.

The frame format for the image transmission and reception is formed as shown in Fig. 2. In this frame format, a reference frequency signal 24 which is a characteristic feature of the present invention is added to the control information signal.

The operation of transmission and reception of an image signal utilizing the system of the present invention will be described.

The operation for transmitting an image signal is performed in a similar manner as in the prior art. More specifically, when the transmission of an image is commanded by the key pad 7 shown in Fig. 1, the CPU 12 detects this command and adds a control information to image data stored in the image memory 14 in accordance with a program stored in the CPU 12, and sends it to the telephone line terminal 3 through the modem circuit 9 and the network control circuit 8. Here, the control information added to the image data includes the frequency correction signal 24 which is characteristic in the present invention as mentioned above.

On the other hand, when receiving a static image signal, the image signal is supplied to the modem circuit 9 through a reverse signal route of the transmission route. The received image signal is input to a PLL for carrier wave signal reproduction and also a chopper demodulator shown in Fig. 6. The PLL for carrier wave signal reproduction detects a frame synchronizing signal included in the received image signal and outputs a demodulation clock signal synchronized with a carrier wave frequency. The chopper demodulator demodulates the modulated image signal to produce analog image data by the use of the demodulation clock signal delivered from the PLL for reproducing carrier wave signal. The demodulated analog image signal is converted into a digital signal based on a demodulation timing clock output from a PLL for data reproduction. If a frequency shift is such a small amount as shown in Fig. 8A, the static image signal can be properly converted into digital image data by the demodulation timing signal which can properly track the image signal. However, if a large amount of a frequency shift as shown in Fig. 8B occurs, the PLL for data reproduction cannot follow the frequency shift in the analog image signal well and the produced demodulation signal therefrom cannot synchronize with the analog signal, so that a demodulation timing signal shifts to the position (b) instead of the expected position (a) as shown in Fig. 8B. Accordingly, the received image cannot be reproduced properly. However, according to the present invention, in the modem circuit 9, the control information signal is demodulated up to a frame synchronizing signal 20 in the same manner as in the prior art, that is, demodulated without correcting the demodulation timing by the frequency correction circuit 23, and the modem circuit 9 sends data to the CPU 12. The CPU 12, upon detecting the end of the frame synchronizing signal 20, actuates the frequency correction circuit 23. The frequency correction circuit 23 detects to what extent the frequency is shifted in the existing telephone line by counting the reference frequency signal added to the control information signal of the received signal by a given clock to compare to a predetermined reference count value, and sends the frequency correction data 25 to the demodulation timing generation circuit 10.

Here, the frequency shift correction data 25 will be described. Assume that a frequency signal of 1747.8 Hz which is the TTC Transmission Standards is sent .for 256 cycles as the reference frequency signal.

At the receiving side, a count of a reference clock (14,31818MHz) is conducted during the period of 1747.8 HZ, 256 cycles.

When there is no frequency shift, the count of the reference clock (14,31818 MHz) during this period is expressed by

$$14.31818 \text{ (MHz)} / 1747.8 \text{ (Hz)} \times 256 = 2097152 \text{ (counts)} \quad (1)$$

That is, the count value of (1) becomes the reference value to be compared to.

However, when a frequency shift occurs, this count value deviates. In other words, when the frequency signal of 1747.8 Hz is shifted to 1737 Hz due to the frequency shift, the count is expressed by

$$14.31818 \text{ (MHz)} / 1737 \text{ (Hz)} \times 256 = 2110221 \text{ (counts)} \quad (2)$$

Accordingly, from formulas (1) and (2), a deviation of frequency per one cycle is expressed by

$$(2110221 - 2097152) / 256 = 51 \text{ (counts)}$$

Therefore, this result can be used as the frequency shift correction data 25.

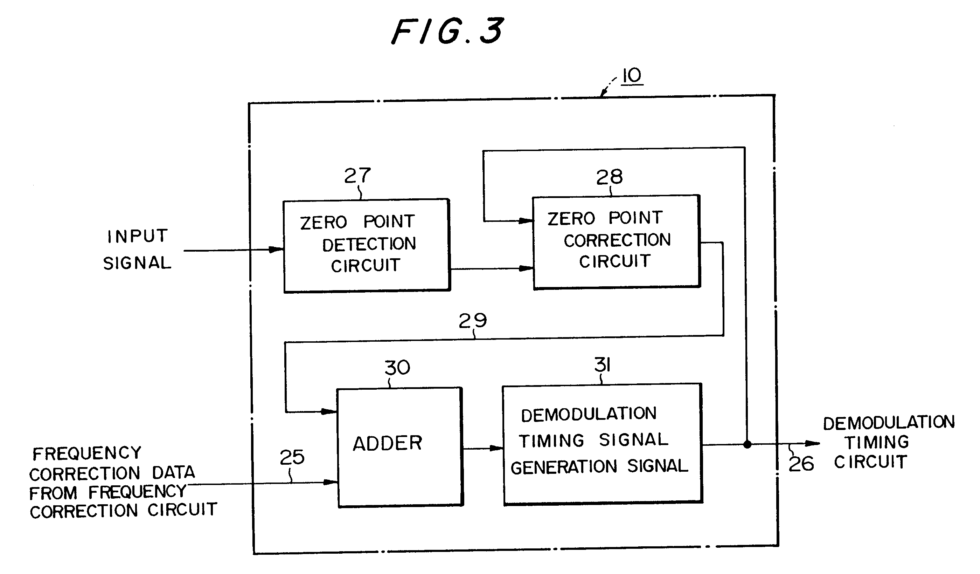

Next, with reference to Fig. 3, a correction method of frequency shift which is characteristic in the present invention will now be described.

A zero point of an input static image signal is detected by a zero point detection circuit 27, and subsequently, a deviation between a demodulation timing signal 26 which is directly obtained from the input signal and the zero point of the image signal is detected in a zero point correction circuit 28, and zero point correction data 29 for this deviation is supplied from the zero point correction circuit to an adder 30.

The zero point correction circuit 28 performs correction of a minute deviation less than per one cycle of an image signal, and it is difficult to correct a deviation such a large frequency shift as exceeds one cycle.

On the other hand, the frequency shift correction data 25 detected by the frequency correction circuit 23 is supplied to the adder 30.

The adder 30 adds up these two correction data 25 and 29, and the obtained data is supplied to the demodulation timing signal generation circuit 31.

In the demodulation timing signal generation circuit 31, a corrected demodulation timing signal 26 is generated based on the inputted data.

The demodulation of image data is performed by the demodulation timing signal 26 corrected in the aforementioned manner, and the demodulated image data is stored in the image memory 14 through the analog/digital converter 11, CPU 12, and image controller 13, and then it is displayed on the display unit 16.

Therefore, according to this embodiment, it is possible to transmit the image data which can be properly demodulated without fail at the receiving side even when a large frequency shift occurs in the input image signal because the frequency shift can be detected based upon the reference frequency signal of the image signal to correct the demodulation timing signal.

In the above embodiments, although it is described about the image signal in the Am-PM (amplitude modulation - phase modulation) system which is the present TTC standards and which is described for example in the EP-A-0 206 572, the present invention is not limited to these embodiments, and the present invention is applicable, for example, to the QAM system (quadrature amplitude modulation system) and other communication systems widely.

## Claims

1. A static image video telephone transmission and reception method wherein a static image signal obtained from a camera (18) is modulated onto a carrier signal which has an audio frequency, and said modulated static image signal is transmitted and received over a telephone line, said transmission and reception method characterized by comprising the steps of:

    a) adding a predetermined number of cyles of a reference frequency signal to a control information signal within said static image signal in order to facilitate detection of a frequency shift caused by said telephone line;

    b) counting for the time period corresponding to said predetermined number of cycles of said reference frequency signal of said static image signal, after transmission over said telephone line, using a specified clock signal;

    c) calculating frequency shift correction data (25), which represent the amount of said frequency shift, by comparing the obtained count value with a predetermined count value;

and

    d) changing a demodulation timing according to said frequency shift correction data (25) such that a corrected demodulation timing signal (26) which properly matches with the timing of said static image data signal is produced.

2. A static image video telephone transmission and reception method according to claim 1, wherein said reference frequency signal is a reference carrier wave signal of 1747.8 Hz.

3. A static image video telephone transmission and reception method according to claim 1, wherein said predetermined number of cycles is 256 cycles.

4. A static image video telephone transmission and reception method according to claim 1, wherein said reference frequency signal is added to a frame format being composed of an image data signal **(19)** including amplitude-modulated and phase-modulated pixel data and a control information signal including a frame synchronizing signal **(20)** used for producing a demodulation timing signal, an amplitude calibration signal **(21)** used for setting an AGC level and gradation of pictures displayed in response to said image data signal **(19)**, and information data **(ID, 22)** used for identifying a capability of the apparatus at the transmission and the receiving side.

5. A static image video telephone transmission and reception method according to claim 4, wherein said reference frequency signal is added between said frame synchronizing signal (20) and said amplitude calibration signal **(21)**.

6. A static image video telephone transmission and reception method according to claim 1, wherein said frequency shift correction data **(25)** is added to a demodulation timing signal obtained directly from said carrier wave frequency of a received static image data signal to correct said demodulation timing signal.

7. A static image video telephone transmission and reception apparatus wherein a static image signal obtained from a camera **(18)** is modulated onto a carrier signal which has an audio frequency, and said modulated static image signal is transmitted and received over a telephone line, said transmission apparatus characterized by:

    a) a counting means **(23)** for counting, during reception, for the time period corresponding to a predetermined number of cycles of a reference frequency signal, which is added to a control information signal within said static image signal, in order to detect a frequency shift caused by said telephone line in the transmitted static image signal;

b) a comparison means (23) for comparing the obtained count value with a predetermined count value;

c) a calculation means (23) for calculating frequency shift correction data (25), which represent the amount of frequency shift caused by said telephone line, from the result of said comparison; and

d) a correction means (10) for correcting a demodulation timing signal on the basis of said calculated frequency shift correction data (25).

8. A static image video telephone transmission and reception apparatus according to claim 7, wherein said counting means (23) comprises a counter which counts for said time period of said reference frequency signal using a specified clock signal.

9. A static image video telephone transmission and reception apparatus according to claim 8, wherein said specified clock signal has a frequency of 14.31818 MHz.

10. A static image video telephone transmission and reception apparatus according to claim 7, wherein said demodulation timing correcting means (10) is composed of a zero point detection circuit (27) which detects the zero-cross point of an input static image signal and generates a zero-cross signal, a zero point correction circuit (28) which generates a zero point correction data (29) by detecting a deviation between a demodulation timing signal (26) outputted from a demodulation timing signal generation circuit (31) and said zero-cross point signal from said zero point detection circuit (27),

an adder (30) which adds said frequency shift correction data (25) and said zero point correction data (29), and

a demodulation timing signal generation circuit (31) which generates a corrected demodulation timing signal (26) from the output of said adder (30).

## Patentansprüche

1. Bildfernsprechübertragungs- und Empfangsverfahren für Stehbilder, bei dem ein Stehbildsignal aus einer Kamera (18) auf ein Trägersignal moduliert wird, welches eine Tonfrequenz hat, und wobei das modulierte Stehbildsignal über eine Fernsprechleitung gesendet und empfangen wird, **gekennzeichnet durch** folgende Verfahrensschritte:

a) Addieren einer vorbestimmten Anzahl von Zyklen eines Bezugsfrequenzsignals zu einem Steuerinformationssignal in dem Stehbildsignal, um eine Frequenzverschiebung festzustellen, die von der Fernsprechleitung verursacht wird;

b) Aufzählen der Zeitperiode entsprechend der vorbestimmten Anzahl von Zyklen des Bezugsfrequenzsignals des Stehbildsignals nach Übertragung über die Fernsprechleitung unter Verwendung eines spezifizierten Taktsignals;

c) Errechnen von Frequenzverschiebe- Korrekturdaten (25), die den Betrag der Frequenzverschiebung darstellen, durch Vergleich des gewonnenen Zählwertes mit einem vorbestimmten Zählwert;

d) Ändern einer Demodulationszeit gemäß den Frequenzverschiebe- Korrekturdaten (25) in der Weise, daß ein korrigiertes Demodulations- Zeitsignal (26) erzeugt wird, welches genau an die Zeitsteuerung des Stehbild- Datensignals angepaßt ist.

2. Verfahren nach Anspruch 1, bei dem das Bezugsfrequenzsignal ein Trägerwellen- Bezugssignal von 1747,8 Hz ist.

3. Verfahren nach Anspruch 1, bei dem die vorbestimmte Anzahl von Zyklen 256 beträgt.

4. Verfahren nach Anspruch 1, bei dem das Bezugsfrequenzsignal zu einem Bildformat addiert wird, das zusammengesetzt ist aus: einem Bilddatensignal (19) einschließlich amplitudenmodulierter und phasenmodulierter Pixeldaten und einer Steuerinformation, die ein Bildsynchronsignal (20) zur Erzeugung eines Demodulationssignals enthält; aus einem Amplitudenabgleichsignal (21), das zur Einstellung eines AGC- Pegels und der Gradation von Bildern verwendet wird, die in Reaktion auf das Bilddatensignal (19) angezeigt werden; und aus Informationsdaten (ID, 22), die zur Eignungsfeststellung des Apparates auf der Sende- und der Empfangsseite benutzt werden.

5. Verfahren nach Anspruch 4, bei dem das Bezugsfrequenzsignal zwischen das Bildsynchronsignal (20) und das Amplitudenabgleichsignal (21) eingefügt wird.

6. Verfahren nach Anspruch 1, bei dem die Frequenzverschiebungs-Korrekturdaten (25) einem Demodulationszeitsignal hinzugefügt werden, das direkt aus der Trägerwellenfrequenz eines empfangenen Stehbild- Datensignals gewonnen wird, um das Demodulationszeitsignal zu korrigieren.

7. Bildfernsprechübertragungs- und Empfangsapparat, bei dem ein mit einer Kamera (18) erzeugtes Stehbildsignal auf ein Trägersignal moduliert wird, welches eine Tonfrequenz hat, und bei dem das modulierte Stehbildsignal über eine Fernsprechleitung gesendet und empfangen wird, **gekennzeichnet durch**:

   a) ein Zählmittel (23), das während des Empfangs einer einer vorbestimmten Anzahl von Zyklen entsprechenden Zeitperiode eines Bezugsfrequenzsignals abzählt, welches einem Steuerinformationssignal in dem Stehbildsignal hinzugefügt wird, um eine Frequenzverschiebung festzustellen, die durch die Fernsprechleitung im gesendeten Stehbildsignal verursacht wird;

   b) ein Vergleichsmittel (23) zum Vergleich des gewonnenen Zählwertes mit einem vorbestimmten Zählwert;

   c) ein Errechnungsmittel (23), das aus dem Ergebnis des Vergleichs Frequenzverschiebe-Korrekturdaten (25) errechnet, die den Betrag einer durch die Fernsprechleitung verursachten Frequenzverschiebung repräsentieren; und durch

   d) ein Korrekturmittel (10) zur Korrektur eines Demodulationszeitsignals auf der Grundlage der errechneten Frequenzverschiebe-Korrekturdaten (25).

8. Apparat nach Anspruch 7, dessen Zählmittel (23) einen Zähler enthält, der die Zeitperiode des Bezugsfrequenzsignals unter Verwendung eines spezifizierten Taktsignals abzählt.

9. Apparat nach Anspruch 8, dessen spezifiziertes Taktsignal eine Frequenz von 14,31818 MHz aufweist.

10. Apparat nach Anspruch 7, dessen Demodulationszeit-Korrekturmittel (10) zusammengesetzt ist aus: einer Nullpunkt-Feststellschaltung (27), die den Nulldurchgangspunkt eines eingegebenen Stehbildsignals feststellt und ein Nulldurchgangssignal erzeugt; einer Nullpunkt- Korrekturschaltung (28), die Nullpunkt- Korrekturdaten (29) durch Feststellung einer Abweichung zwischen einem von einer Demodulationszeitsignal-Erzeugungsschaltung (31) ausgegebenen Demodulations- Zeitsignal (26) und dem von der Nullpunkt- Feststellschaltung (27) abgegebenen Nulldurchgangspunktsignal erzeugt; aus einem Addierer (30), der die Frequenzschiebe-Korrekturdaten (25) und die Nullpunkt-Korrekturdaten (29) addiert; und aus einer Demodulations- Zeitsignal- Erzeugungsschaltung (31), die ein korrigiertes Demodulationszeitsignal (26) aus dem Ausgangssignal des Addierers (30) erzeugt.

## Revendications

1. Procédé de transmission et de réception vidéotéléphonique d'images stationnaires, dans lequel un signal d'image stationnaire obtenu à partir d'une caméra (18) est modulé sur un signal porteur ayant une fréquence audio, et ledit signal d'image stationnaire modulé est transmis et reçu sur une ligne téléphonique, ledit procédé de transmission et de réception étant caractérisé par le fait de comprendre les étapes ci-après :

   a) addition d'un nombre prédeterminé de cycles d'un signal à fréquence de référence à un signal d'information de commande dans ledit signal d'image stationnaire, afin de faciliter la mesure d'un decalage de fréquence provoqué par ladite ligne telephonique ;

   b) comptage pendant la période correspondant audit nombre prédéterminé de cycles dudit signal à fréquence de référence dudit signal d'image stationnaire, après une transmission sur ladite ligne téléphonique à l'aide d'un signal d'horloge spécifié ;

   c) calcul de données de correction de décalage de fréquence (25) qui représentent la valeur dudit decalage de fréquence, en comparant la valeur de compte obtenue et une valeur de compte prédéterminée ; et

   d) modification d'un séquencement de démodulation en fonction desdites données de correction de décalage de fréquence (25) de manière à émettre un signal de séquencement de démodulation (26) corrigé qui s'adapte correctement au séquencement dudit signal de données d'image stationnaire.

2. Procédé de transmission et de réception vidéotéléphonique d'images stationnaires selon la revendication 1, dans lequel ledit signal à fréquence de référence est un signal à onde porteuse de référence de 1747,8 Hz.

3. Procédé de transmission et de réception vidéotéléphonique d'images stationnaires selon la revendication 1, dans lequel ledit nombre prédéterminé de cycles est 256 cycles.

4. Procédé de transmission et de réception vidéotéléphonique d'images stationnaires selon la revendication 1, dans lequel ledit signal à fréquence de référence est ajouté à un format de trame étant constitué d'un signal de données d'image (19) comprenant des données d'élément d'image à amplitude modulée et à phase modulée et un signal d'information de commande, comprenant un signal de synchronisation de trame (20) utilisé pour produire un signal de séquencement de démodulation, un signal de calibrage d'amplitude (21) utilisé pour établir un niveau AGC et une gradation d'images affichée en réponse audit signal de données d'image (19), et des données d'information (ID, 22) utilisées pour identifier une capacité de l'appareil du côté transmission et réception.

5. Procédé de transmission et de réception vidéotéléphonique d'images stationnaires selon la revendication 4, dans lequel ledit signal à fréquence de référence est ajouté entre ledit signal de synchronisation de trame (20) et ledit signal de calibrage d'amplitude (21).

6. Procédé de transmission et de réception vidéotéléphonique d'images stationnaires selon la revendication 1, dans lequel lesdites données de correction de décalage de fréquence (25) sont ajoutées à un signal de séquencement de démodulation obtenu directement à partir de ladite fréquence d'onde porteuse d'un signal reçu de données d'image stationnaire pour corriger ledit signal de séquencement de démodulation.

7. Appareil de transmission et de réception vidéotéléphonique d'images stationnaires, dans lequel un signal d'image stationnaire obtenu à partir d'une caméra (18) est modulé sur un signal porteur ayant une fréquence audio et ledit signal modulé d'image stationnaire est transmis et reçu sur une ligne telephonique, ledit appareil de transmission etant caractérisé par :

a) un moyen de comptage (23) pour compter, durant la réception, pour la période correspondant à un nombre prédéterminé de cycles d'un signal à fréquence de référence, qui est ajouté à un signal de commande d'information se trouvant dans ledit signal d'image stationnaire, en vue de mesurer un décalage de fréquence provoqué par ladite ligne téléphonique dans le signal d'image statique transmis ;

b) un moyen de comparaison (23) pour comparer la valeur de compte obtenue à une valeur de compte prédéterminée ;

c) un moyen de calcul (23) pour calculer des données de correction de décalage de fréquence (25) qui représentent la valeur de décalage de fréquence (4) provoqué à partir du résultat de ladite comparaison ; et

d) un moyen de correction (10) pour corriger un signal de séquencement de démodulation sur la base desdites données de correction de décalage de fréquence (25) calculées.

8. Appareil de transmission et de réception videotéléphonique d'images stationnaires selon la revendication 7, dans lequel ledit moyen de comptage (23) comprend un compteur qui compte pendant ladite période dudit signal de fréquence de référence à l'aide d'un signal d'horloge spécifié.

9. Appareil de transmission et de réception vidéotéléphonique d'images stationnaires selon la revendication 8, dans lequel ledit signal d'horloge spécifié présente une fréquence de 14,31818 MHz.

10. Appareil de transmission et de réception vidéotéléphonique d'images stationnaires selon la revendication 7, dans lequel ledit moyen de correction de séquencement de démodulation (10) est constitue d'un circuit de détection de passage par un zéro (27) qui détecte le point de passage par zéro d'un signal d'entrée d'image stationnaire et produit un signal de passage par zéro,

un circuit de correction de point zéro (28) produisant des données de correction de point zéro (29) en mesurant une déviation entre un signal de séquencement de démodulation (26) émis par un circuit de production de signaux de séquencement de démodulation (31) et ledit signal de point de passage par zéro émis par ledit circuit de détection de point zéro (27),

un additionneur (30) qui additionne lesdites données de correction de décalage de fréquence (25) et lesdites données de correction de point zéro (29), et

un circuit de production de signaux de séquencement de démodulation (31) qui produit un signal de séquencement de démodulation (26) corrigé à partir du signal de sortie dudit additionneur (30).

# FIG. 1

## FIG. 2

| CONTROL INFORMATION SIGNAL | | | | IMAGE DATA SIGNAL |
|---|---|---|---|---|
| FRAME SYNCHRONIZING SIGNAL | REFERENCE FREQUENCY SIGNAL | AMPLITUDE CALIBRATION SIGNAL | I D | |
| 20 | 24 | 21 | 22 | |

EP 0 402 918 B1

# FIG. 3

# FIG. 4A

IMAGE SIGNAL
(AM-PM SYSTEM)

FIRST PHASE | SECOND PHASE

DEMODULATION
TIMING SIGNAL

# FIG. 4B

IMAGE SIGNAL
(AM-PM SYSTEM)

FIRST PHASE | SECOND PHASE

DEMODULATION
TIMING SIGNAL

26

EP 0 402 918 B1

# FIG.5

FIG.6

CHOPPER DEMODULATOR

FILTER

ANALOG/ DIGITAL CONVERTER

TO CPU

8 BIT DIGITAL DATA

CARRIER REPRODUCTION PLL

DATA REPRODUCTION PLL

9

10

EP 0 402 918 B1

## FIG.7

| CONTROL   INFORMATION   SIGNAL | | | IMAGE DATA SIGNAL |
|---|---|---|---|
| FRAME SYNCHRONIZING SIGNAL | AMPLITUDE CALIBRATION SIGNAL | ID | |
| 20 | 21 | 22 | 19 |

EP 0 402 918 B1

# FIG.8A

IMAGE SIGNAL
(AM-PM SYSTEM)

FIRST PHASE | SECOND PHASE

DEMODULATION
TIMING SIGNAL

# FIG.8B

IMAGE SIGNAL
(AM-PM SYSTEM)

FIRST PHASE | SECOND PHASE

a
b

DEMODULATION
TIMING SIGNAL